# EUROPEAN PATENT SPECIFICATION

(11) **EP 2 894 172 B1**
(45) Date of publication and mention of the grant of the patent: **28.03.2018**
(21) Application number: 14194687.1
(22) Date of filing: 25.11.2014
(51) Int. Cl.: C08B 30/18, C08L 3/02, C09D 103/02, C09J 103/02

(54) **AQUEOUS COMPOSITIONS OF POLYALDEHYDES FROM THE OXIDATION OF POLYSACCHARIDES AND THEIR THERMOSETS**
Wässrige Zusammensetzungen aus Polyaldehyden aus der Oxidation von Polysacchariden und deren Duroplasten
Compositions aqueuses de polyaldéhydes produits par l'oxydation de polysaccharides et leurs produits thermodurcis

(30) Priority: 11.12.2013 US 201361914452 P
(43) Date of publication of application: 15.07.2015
(73) Proprietor: Rohm and Haas Company, Philadelphia, PA 19106-2399 (US); Dow Global Technologies LLC, Midland, MI 48674 (US)
(72) Inventor: Clark, Thomas P., Midland, MI Michigan 48640 (US); Finch, William C., Ambler, PA Pennsylvania 19002 (US); Rand, Charles, Philadelphia, PA Pennsylvania 19125 (US)
(74) Representative: Houghton, Mark Phillip

(56) References cited:
- EP-A1- 1 529 820
- EP-A1- 2 597 123
- EP-A2- 0 755 944
- WO-A2-2011/070529
- US-A1- 2013 127 085

## Description

The present invention relates to thermosetting aqueous binder compositions comprising oxidized dextrins having at least two aldehyde groups, preferably, oxidized maltodextrins, and polyamines having at least two primary amine groups, preferably diprimary diamines, as well as to methods of making and using the aqueous binder compositions and to thermoset products thereof, such as glass or mineral wool fiber insulation and mats.

Presently, there are no thermosetting binder resins that can compete with ureaformaldehyde (UF) or phenol-formaldehyde (PF) on a cost for performance basis. However, the increasing classification of formaldehyde as a carcinogen worldwide and increasing evidence supporting this classification has left binder applicators looking for a replacement for such UF and PF thermosetting binder resins, including thermoset binders for fiber insulation. Desirably, the replacement would be a drop in replacement, i.e. it would enable the binder applicators the luxury of using the same application equipment they currently use.

To address the cost for performance needs in the fiber insulation industry, several (poly)saccharide and amine aqueous thermosetting binders have been developed in recent years. These compositions, even when cured, provide poor to fair strength when or if wetted; and they tend to offgas to a large extent, thus increasing the amount needed for use, thereby increasing their cost in use as a binder.

U.S. Patent no. 3,278,468, to Borchert, discloses the oxidation of polysaccharides, such as starch wherein periodate oxidized starch and urea comprise a thermoset. The main problem with such binder formulations is that the shelf life of these materials is hours before it gels, which is not suitable for a commercial product; further, the Borchert composition it is a dispersion not a homogenous solution where the oxidized starch is not water soluble but rather a dispersion.

The present inventors have endeavored to solve the problem of providing a formaldehyde free binder comprising a biosourced material which is reasonably shelf stable and provides improved wet tensile strength when cured as compared to (poly)saccharide and amine binders.

### STATEMENT OF THE INVENTION

1. In accordance with the present invention, substantially formaldehyde free aqueous thermosetting binder compositions comprise i) one or more water soluble oxidized dextrin made by oxidizing a dextrin having a dextrose equivalent (DE) value of from 1 to 25, preferably, from 1 to 20, preferably oxidized maltodextrin, the oxidized dextrin chosen from an oxidized dextrin having from 2 to 10 millieq CHO/g of dry oxidized dextrin made by oxidizing a dextrin having a DE value of from 2 to 25, or, preferably, from 2 to 20, and an oxidized dextrin having from 0.25 to 5 millieq CHO/g of dry oxidized dextrin made by oxidizing a dextrin having a DE value of below 2 , and ii) one or more diprimary diamine or poly(primary amine), preferably, a diprimary diamine, wherein the weight ratio of the total diprimary diamine or poly(primary amine) solids to total oxidized dextrin solids ranges from 0.1:1 to 1.25:1, preferably, from 0.1:1 to 0.5:1.
2. The compositions of the present invention in 1, above, may further comprise from 0.01 to 20 wt.%, or, preferably, up to 10 wt.%, of one or more stabilizer, such as a stabilizer acid or salt having a pKa of 8.5 or less, preferably 7.5 or less, for example, ammonium salts of inorganic acids, like ammonium phosphate, diammonium phosphate (DAP) or ammonium sulfate (AS).
3. The compositions of the present invention in 1 or 2, above, may further comprise up to 6 wt.%, or, preferably, up to 4 wt.%, of one or more fire retardant, such as, phosphorous containing salts or an organic bromine compound, such as, for example, decabromodiphenyl oxide/antimony trioxide.
4. In the compositions of the present invention in 1, 2 or 3, above, the poly(primary amine) has a weight average molecular weight of from 200 to 5,000 and comprises 10 wt.% or more, or, preferably, 20 wt.% to 100 wt.%, of repeating units comprising primary amine groups, such as aminoethyl groups, based on the total weight of the poly(primary amine).
5. In another aspect of the present invention, methods of using any of the aqueous thermosetting binder compositions 1 to 3, above, comprise applying the binder compositions to or mixing them with a substrate and then heating the thus treated substrates or mixtures to cure the binder, for example, at from 100 to 400°C. Suitable substrates may include fibers, slivers, chips, particles, films, sheets, and combinations thereof. Suitable substrate materials may include, for example, glass, glass fiber, stone, stone fibers, composites and composite fibers or of organic and inorganic substrates, wood, or woody materials.
6. In yet another of the present invention, methods of making the compositions of any of 1 to 3, above comprise oxidizing one or more dextrin in water in the presence of an oxidant chosen from a periodate, a periodate salt, a combination of a peroxide, preferably hydrogen peroxide, and a metal salt catalyst, preferably, an iron salt having at least one iron atom in the +2 oxidation state, or, more preferably, iron sulfate, and to provide an aldehyde group containing oxidized dextrin, and, mixing the resulting product with a diprimary diamine or a poly(primary amine).
7. In yet still another aspect, the present invention comprises a treated substrate, for example, a fiber matt, containing a cured binder resulting from applying the compositions of any of 1 to 3, above, thereto. Preferably, the density of the fiber matt is from 5 to 220 (kg/m³).

As used herein, the phrase "aqueous" or includes water and mixtures composed substantially of water and water-miscible solvents.

As used herein, the phrase "based on the total solids" refers to weight amounts of any given ingredient in comparison to the total weight amount of all of the non-volatile ingredients in the binder (e.g. oxidized dextrins, primary amine(s), stabilizers, silanes etc).

As used herein, unless otherwise indicated, the phrase "millieq CHO/g" refers to the aldehyde content of a dry oxidized dextrin found by dissolving a known amount of dry oxidized dextrin (from 400 to 600 mg) in a sufficient amount of deionized water (20 - 30 mL) to fully dissolve the oxidized dextrin to make a first solution, adjusting the pH of the first solution to 3.2 by adding a 0.1M NaOH aqueous solution, adding a second solution of hydroxylamine (0.30 mL of a 50 wt% solution in water) to the oxidized dextrin first solution while stirring the second solution with a PTFE-coated stirbar, then stirring the resulting combined solution for four hours at room temperature and rapidly titrating it with 0.6M HCl solution to get to a pH of 3.2. The molar quantity of HCl required to bring the pH to 3.2 is equivalent to the unreacted hydroxylamine in the solution. The molar difference between the hydroxylamine added and the titrated hydroxylamine is equivalent to the molar amount of aldehyde present in the oxidized dextrin.

As used herein, unless otherwise indicated, the phrase "millieq COOH/g" refers to the measured carboxylic acid content of a dry oxidized dextrin diluted with water and titrated with base until the pH levels off.

As used herein, the phrase "DE" or "dextrose equivalent" refers to the "reducing sugar content expressed as dextrose percentage on dry matter" and is used to characterize the molecular weight of polysaccharides. See Handbook of Starch Hydrolysis Products and Their Derivatives (Page 86, 1995 By M. W. Kearsley, S. Z. Dziedzic). For dextrins, the theoretical value of DE is inversely proportional to number average molecular weight (Mn), and is calculated as DE = Mglucose/Mn × 100 where Mglucose is the molecular weight of glucose (180 Da) so DE = 180/Mn X 100. See Rong, Y. et al., "Determination Of Dextrose Equivalent Value And Number Average Molecular Weight Of Maltodextrin By Osmometry", J. Food Sci. 2009 Jan-Feb;74(1), pp. C33-C40. For example, dextrose has a DE of 100 while pure starch (e.g. corn) has a DE value of close to 0.

As used herein, unless otherwise indicated, the term "dextrin" refers to an oligomeric or polymeric breakdown product obtained from a polyglucoside, starch or glycogen by any means, such as chemically, for example, by acid hydrolysis, enzymatic hydrolysis, or other means of polysaccharide degradation.

As used herein, unless otherwise indicated, the term "dry oxidized dextrin" means an oxidized dextrin which has been freeze dried by placing the oxidized dextrin into a vacuum flask that is mounted on a freeze drying apparatus and drying for a minimum of 24 hours.

As used herein, unless otherwise indicated, the term "repeat dextrin unit" refers to a monosaccharide repeat unit (CHOHₓ, where x is 6, FW:∼ -180 g/mol per dextrin unit) in the dextrin.

As used herein, the phrase "emulsion polymer" refers to a polymer that when combined with water or aqueous solvent forms a disperse phase of an aqueous emulsion.

As used herein the "pKa" of a stabilizer will be treated as the pKa of the most acidic proton of an acid stabilizer or the lowest pKa of the acid or salt stabilizer, i.e. the pKa of the strongest proton or base conjugate is understood.

As used herein, the term "poly(primary amine)" means any compound having three or more primary amine groups.

As used herein, unless otherwise indicated, the term "primary amine equivalent weight" of any molecule means the total molecular weight of a diprimary diamine or a poly(primary amine) divided by the number of primary amine groups in the molecule.

As used herein, the phrase "substantially formaldehyde-free" refers to compositions free from added formaldehyde, and which do not liberate substantial formaldehyde as a result of drying and/or curing. Preferably, such binder or material that incorporates the binder liberates less than 100 ppm of formaldehyde, more preferably less than 50 and most preferably less than 25 ppm of formaldehyde, as a result of drying and/or curing the binder.

As used herein, unless otherwise indicated, the term "weight average molecular weight" of a polyamine refers to the molecular weight of a substance as determined by, for commercially available polyamines, supplier information, or, for polyamines not commercially available size exclusion gel chromatography (SEC) against polyethylenimine standards at weight average molecular weights that cover the full range of molecular weights to be analyzed (from less than 200 to at least as large as 5,000).

As used herein, "wt.%" or "wt. percent" means weight percent based on solids.

As used herein, the phrase "based on the total binder solids" refers to weight amounts of any given ingredient in comparison to the total weight amount of all of the non-volatile ingredients in the binder (e.g., oxidized dextrins, primary amines, stabilizers, fire retardants, silanes, emulsion copolymer(s), reactive water proofing agents, and the like).

The singular forms "a," "an," and "the" include plural referents unless the context clearly dictates otherwise. Unless defined otherwise, technical and scientific terms used herein have the same meaning as is commonly understood by one skilled in the art.

Unless otherwise indicated, any term containing parentheses refers, alternatively, to the whole term as if no parentheses were present and the term without that contained in the parentheses, and combinations of each alternative. Thus, the term "(meth)acrylate" encompasses, in the alternative, methacrylate, or acrylate, or mixtures thereof.

The endpoints of all ranges directed to the same component or property are inclusive of the endpoint and independently combinable. Thus, for example, a disclosed range of a ratio of from 0.1:1 to 1.25:1 or, preferably, from 0.1:1 to 0.5:1 means any and all of from 0.1:1 to 1.25:1, from 0.1:1 to 0.5:1, and from 0.5:1 to 1.25:1.

Unless otherwise indicated, conditions of temperature and pressure are room temperature and standard pressure, also referred to as "ambient conditions". The aqueous binder compositions may be dried under conditions other than ambient conditions.

In the present invention, water soluble oxidized dextrins are easily handled and provide improved shelf life. The present invention provides methods for oxidizing dextrins to form polyaldehydes that in substantially formaldehyde free aqueous binder compositions with one or more primary amine having two or more primary amine groups cure to give a thermoset having a dimensional mechanical analysis (DMA) show similar cure profiles to commercial urea formaldehyde (UF) resins. In fact, the thermosets exhibit as high as a 60% retention of dry tensile properties after being subjected to hot, wet conditions. Surprisingly, the hot wet retention of tensile strength was observed even when the oxidized dextrin comprised less than 6 milleq of CHO per dry gram of oxidized dextrin.

Oxidized dextrins can be formed in known ways, such as by heating one or more dextrins in an aqueous medium in the presence of an oxidant, for example, a peroxide or a periodate, a periodate salt, e.g. KlO₄ and an acid, e.g. H₂SO₄, a metal salt catalyst, or a combination of an oxidant and a metal salt catalyst. Suitable metal salt catalysts may include, for example, iron (II) sulfate and lead acetate. Suitable combinations of oxidants and metal salt catalysts may include peroxides and any of iron (II) sulfate, cobalt (II) acetate or silver nitrate, as well as the combination of persulfate salts and silver nitrate. Such methods are depicted, for example, in Harrison et al., Compendium of Organic Synthetic Materials, Wiley-Interscience, 1971, New York, pages 142-143.

In the methods for oxidation and processing of dextrins, the amount of catalyst used may range from 0.001 to 10 wt.%, or, preferably, from 0.01 to 0.5 wt.%, based on the total solids weight of the oxidized dextrins.

In the methods for oxidation and processing of dextrins, the amount of oxidant used may range from 1 to 125 wt.%, or, preferably, from 6 to 120 wt.%, based on the total solids weight of the oxidized dextrins.

Temperatures in processing to make the thermosetting aqueous binder compositions of the present invention may range from 20°C to 100°C, or, preferably, from 20 °C to 50 °C and may include ambient processing or processing with no added heat. Processing must not heat the dextrin so much as to cause it to caramelize.

Suitable dextrins include polysaccharides such as Clintose™ CR 10, 15, and 18 DE maltodextrins (ADM, Decatur, IL), STAR-DRI™ 1 (DE), 5 (DE),10 (DE), and 20 (DE) maltodextrins (Tate & Lyle, Decatur, IL).

The aqueous binder compositions comprise one or more diprimary diamines or primary amine group containing compounds, including, for example, diprimary diamines, such as lysine and 1,6-hexamethylene diamine (HMD), and poly(primary amines), such as polyamines having a weight average molecular weight of 5,000 or less, preferably 3,800 or less, or, more preferably, 2,500 or less, e.g. polylysines, polymers of aminoalkyl (meth)acrylates, polyethyleneimines such as Polymin™ SK and HM Polymin™ (BASF, Ludwigshafen, Germany)

Preferred diprimary diamines or oligo(primary amine)s may have an amine equivalent weight of 400 or less, preferably 200 or less.

Other diprimary diamines may be chosen from oligomeric diprimary diamines , for example, triethylenetetraamine.

The poly(primary amine)s may comprise polymers having 10 wt.% or more, or, preferably, 20 wt.% or more, of primary amine groups, such as aminoethyl groups, based on the total weight of the polymer.

Suitable primary di-amines and poly (primary amines) may include, for example, alkyl diprimary or higher primary diamines, such as aliphatic primary diamines, such as aminoguanidine and its salts, e.g. aminoguanidine hydrochloride, putrescine, n-alkylenediamines, like ethylene diamine, hexamethylene diamines, and other alkylene di-amines; cycloaliphatic primary diamines, such as, for example, diaminoethylpiperazine; diprimary amine functional amino acids, such as lysine and aminoglycine; and aromatic di-primary amines, such as, for example, bis-(aminomethyl) cyclohexane (bisAMC), m-xylenediamine (MXD); polyamine polymers of the desired molecular weight, such as polyethyleneimines, polyethylenimine containing copolymers and block copolymers having 10 wt.% or more of primary amine groups, (co)polymers of n-aminoalkyl (meth)acrylates, such as aminoethyl methacrylate, polyguanidines, and any other (co)polymer which has at least 10 wt.%, preferably 20 wt.%, of primary amine groups.

In the aqueous binder compositions, the amount of the primary amine group containing diprimary diamine or poly(primary amine) may range from 0.1:1 to 1:1, or, preferably, from 0.15:1 to 0.75:1 as a molar ratio of the primary amine groups to aldehyde groups in the oxidized dextrin..

In accordance with the aqueous binder compositions of the present invention one or more stabilizer compound is included to insure shelf stability, such as when a strong diprimary diamine such as HMDA is used, or when an oxidized dextrin is used that has a high aldehyde group content, e.g. 4.5 or more milleq CHO/g of the oxidized dextrin as dry oxidized dextrin.

The stabilizer in the aqueous binder composition of the present invention may include (i) an organic stabilizer chosen from a monocarboxylic acid, a dicarboxylic acid, a fatty acid, an acid functional fatty acid ester compound, an acid functional fatty acid ether compound, and mixtures thereof, (ii) an inorganic stabilizer chosen from a mineral acid, a mineral acid amine salt, a mineral acid ammonia salt, and a Lewis acid, (iii) a fugitive acid stabilizer, or (iv) mixtures of any of the foregoing with a fatty acid, a fatty acid ester, a fatty acid ether compound.

The amount of the stabilizer used is inversely proportional to the pKa of the stabilizer compound. Preferred stabilizers have a pKa of 7.5 or less, or, more preferably, 7.0 or less.

Suitable inorganic stabilizers may include, for example, Lewis acids, such as aluminum sulfate mineral acids, like sulfuric acid; amine acid salts and ammonia acid salts. The Lewis acids useful in the present invention include metal salts, such as aluminum salts but do not include alkali(ne) metal salts, iron salts, or zinc salts. Preferably, the inorganic stabilizer is ammonium bicarbonate, sulfuric acid, ammonium nitrate or aluminum sulfate.

Suitable organic stabilizers may include, for example, any such compound or material which can be dispersed in aqueous media, such as, for example, mono- and di- carboxylic organic acid stabilizers, e.g. acetic acid, butyric acid and adipic acid; fatty acids, acid functional fatty acid esters or ethers. Preferred organic stabilizers are acetic acid, adipic acid and fatty acids, such as coconut acids and oleic acids.

To provide compositions that can cure at reduced temperatures, that cure in less time, or that have reduced cure energies, one or more fugitive stabilizers that flash off under application conditions may be used as the stabilizer. Citric acid, acetic acid and ammonium bicarbonate are examples of fugitive stabilizers. Fugitive stabilizers are useful in binder applications for any substrate for which the binders of the present invention can be used, including glass fiber, stone wool substrates and heat sensitive substrates, such as those comprising plastic fibers or particles. Fugitive stabilizers in effect will reduce the offgasing caused by heat curing the binder and thus may be useful for applications in high density substrates, and wood composites.

To enhance the water resistance of the binder, suitable organic stabilizers can be any C₁₂ to C₃₆, preferably, C₁₂ to C₂₄, fatty acid, or any acid functional a C₁₂ to C₃₆, preferably, C₁₂ to C₂₄ fatty acid ether or ester. Such molecules can be hydrolyzed from any natural source, such as a vegetable, plant or animal oil. Suitable compounds or molecules may be unsaturated fatty acids, such as oleic and linoleic acids or saturated acids, such as stearic acids. Examples include, but are not limited to, coconut acids from coconut oil, myristic acids from palm kernel oil, acids from nutmeg butter, and acids from flax oil, cottonseed and corn oil.

Preferably for flexible binders, the aqueous composition further comprises an emulsion polymer. Suitable emulsion polymers may comprise acrylic emulsions having, as polymerized units up to 30 wt.% polymerized acid comonomers, preferably from 1 to 20 wt.%, or, preferably, from 10 to 18 wt.%, based on the total weight of copolymerized monomers, hydrophobic emulsion polymers comprising greater than 30% by weight, based on the weight of the emulsion polymer solids, ethylenically-unsaturated acrylic monomer containing a C₂ or greater alkyl group, and acrylic or styrene acrylic emulsion polymers. Suitable acid comononers used to make the emulsion polymers may include, for example, methacrylic acid, acrylic acid, fumaric acid, maleic acid, itaconic acid, 2-methyl itaconic acid, a,b-methylene glutaric acid, monoalkyl maleates, and monoalkyl fumarates; ethylenically unsaturated anhydrides such as, for example, maleic anhydride, itaconic anhydride, acrylic anhydride, and methacrylic anhydride; and salts thereof. (Meth)acrylic acid is the preferred carboxy acid co-monomer.

The emulsion polymers may be present in the composition in an amount of 1% or more, or, 5% or more, or, up to 50%, or 30% by weight, based on the total solids.

The aqueous binder compositions of the present invention may further comprise other additives known in the art including, but not limited to, polymeric polyacid aqueous solution polymers such as polyacrylic acid; surfactants to help flow (silicones, fatty acids); biocides; corrosion inhibitors or passivators for metal surfaces, such as, for example, triazole and phosphate compounds, tin oxalates, thioureas, oxalates, chromates, and pH adjustors; lubricants; de-dusting oils, such as, for example, mineral oils; anti-foaming agents such as dimethicones, silicon-polymer (polysiloxane) oils and ethoxylated nonionics; and flame retardants like a bromide flame retardant (decabromodiphenyl oxide/antimony trioxide). Preferably, any such additive is formaldehyde free or does not contain or generate formaldehyde during binder formation, application or cure.

The aqueous binder compositions can further comprise coupling agents such as organosilanes, particularly 3-aminopropylsilanes, such as Silquest™ A-187 silanes (manufactured by GE Silicones-OSi Specialties, located in Wilton CT); other amino silanes such as 3-aminopropyl dialkoxysilanes and 3-(2-aminoethyl)aminopropylsilanes; epoxy silanes such as glycidoxypropylsilanes, vinyl silanes and hydrophobic silanes. Suitable amounts of such organosilanes may range 0.25 wt.% to 5 wt.%, or, preferably, up to 1 wt.%, based on the total binder composition solids.

The present invention stable aqueous thermosetting binder compositions comprising a total solids of from 30 to 95 wt.%, preferably, 50 wt.% or more, or, preferably, 90 wt.% or less, based on the total weight of the aqueous binder. Such high solids aqueous binder compositions would not generally have been possible without the stability of the aqueous binder compositions of the present invention.

The present invention provides methods of using the binder comprising applying aqueous binder compositions to a substrate and drying and/or curing. In drying (if applied in aqueous form) and curing the curable compositions, the duration, and temperature of heating, will affect the rate of drying, ease of processing or handling, and property development of the treated substrate. Suitable heat treatment temperatures may range 100°C or more, and up to 400°C. The preferred treatment is substrate dependant. Thermally sensitive substrates such as cellulose fibers may be treated at 130 to 175°C while thermally less sensitive composites may be treated at 150 to 200°C; and thermally resistant substrates such as mineral fibers may be treated at 190 to 300°C for the desired times necessary to effect cure. Preferably, heat treatment temperatures range 150°C or higher; such preferred heat treatment temperatures may range up to 225°C, or, more preferably, up to 200°C or, up to 150°C. In the methods of use, the composition components need not all be pre-mixed prior to application of the binder to the substrate. For example, one or more components may be applied to a non-woven substrate, followed by application of the other binder components of this invention either in aqueous or dried form. After application, the binder can be cured by heating the coated non-woven to a sufficient temperature where it cures on the substrate.

The aqueous binder compositions of the present invention can be applied to the substrate, such as, for example, a web of fibers, by any suitable means including, for example, air or airless spraying, padding, saturating, roll coating, curtain coating, beater deposition, coagulation or dip and squeeze application, and the resultant saturated wet web laying on a supporting wire or screen is run over one or more vacuum boxes to remove enough binder to achieve the desired binder content in the product or treated substrate.

In applying binder, the binder add on level in substrate can range from 3 wt.% or more, or 5 wt.% or more, or up to 35 wt. percent of the finished substrate, preferably 10 wt.% or more, or, most preferably 12 to 25 wt.%, based on the total weight of the treated dry substrate, prior to cure.

Suitable substrates for binder application may include, for example, textiles, including cotton, linen, wool, and synthetic textiles from polyester, rayon, or nylon, and superabsorbent fibers; vegetable or cellulosic fibers, such as jute, sisal, flax, cotton and animal fibers; as well as heat resistant substrates, such as metal; plastics; synthetic fibers, e.g. polyester, rayon, poly(acrylonitrile) (PAN), poly(lactic acid) (PLA), poly(caprolactone) (PCL), aramid fibers, polyimide fibers, polyolefins and bi-component fiber comprising two or more fiber-forming polymers such as polypropylene and polyethylene terephthalate; mineral fibers, such as glass and mineral fibers, slag or stonewool, ceramic fibers, metal fibers, carbon fibers, and woven and non-woven fabrics made therefrom; and heat-sensitive substrates, such as wood, including, solid wood, wood particles, fibers, chips, flour, pulp, and flakes; paper and cardboard.

The binders of this invention may preferably be used to treat non-woven webs. "Non-woven web(s)" refers to any article or sheet-like form made from natural and/or synthetic fibers wherein the fibers are aligned in a random or semi-random order (i.e., not deliberately ordered) whether by mechanical means such as, for example, by entanglement caused by needle-punching, spunbonding, spunlace webs, meltblown webs, air-laid (dry laid) process, and by a wet-laid process; and/or by chemical means such as, for example, treatment with a polymeric binder; or by a combination thereof.

Some suitable uses for the binder of the present invention include, for example, making non-structural composites and laminates for indoor furniture, trim and molding; and the wet end formation and dry end treating or coating of paper, paperboard and cardboard, such as filter media; and the making and treating of woven and non-woven fabrics, such as, for example, fiberglass and stonewool insulation batting, polyester and spunbonded roof shingles, underlayment and scrim, and gypsum board facings, and filter media, such as air and oil filters.

### EXAMPLES

The following examples serve to better illustrate the invention, which is not intended to be limited by the examples.

Oxidized Dextrin "A" Synthesis: An oxidized maltodextrin was formed by filling a 2 liter 4-neck flask with 800.00g of deionized (DI) H₂O. Then, 41.03g of maltodextrin (Spectrum Chemicals, New Brunswick, NJ, DE∼10.5, 97.5% solids lot# 2AK0418) was added and stirring was set to 500 RPM. After the maltodextrin dissolved, 56.40g of sodium periodate (Sigma-Aldrich, St. Louis, MO) was added to the flask. An N₂ blanket was applied to the flask and the entire vessel was covered with aluminum foil to prevent light transmission. The composition in the flask was allowed to stir for 24 hours and was then put through a column that contained 700 grams of Amberlite™ IRN150 ion exchange resin (Dow Chemical, Midland, MI) to strip iodate from the mixture. Then 3 volume voids of water were then used to flush the oxidized maltodextrin from the column. All of the material was freeze dried for a minimum of 24 hours to make dry oxidized maltodextrin.

Oxidized Dextrin B Synthesis: Synthesis was reproduced in three separate containers, wherein in each container a reaction was set up in a 40 mL glass vial in an aluminum block at room temperature. Iron(II) sulfate (about 15-18 mg) (Sigma-Aldrich, St. Louis, MO) was weighed into each glass vial. An M1083 maltodextrin (5.0 g) (Spectrum Chemicals, New Brunswick, NJ, DE∼10.5, 97.5% solids, lot# 2AK0418), was weighed into each vial. A PTFE-coated stirbar was added to each vial and the mixture was dissolved in water (10 mL). A 30 wt% hydrogen peroxide solution (1.4 mL) was added to each vial over 2 hours using a syringe pump adding at a rate of 0.01 mL / min. Each reaction mixture was stirred overnight at room temperature with a vent to the atmosphere. The three vials were analyzed with peroxide test strips and each showed complete conversion of the peroxide. Then, the contents of the three vials was combined and placed in a freeze dryer for 5 days. After removal, the solid was weighed, giving 14.3 g of dry oxidized maltodextrin.

Oxidized Dextrin C Synthesis: Synthesis was reproduced in two 40 mL glass vials placed in an aluminum block at room temperature. Iron(II) sulfate (about 15-18 mg) (Sigma-Aldrich, St. Louis, MO) was weighed into each glass vial. An M1083 maltodextrin (7.0 g) (Spectrum Chemicals, New Brunswick, NJ, DE∼10.5, 97.5% solids, lot# 2AK0418), was weighed into each vial. A PTFE-coated stirbar was added to each vial and each mixture was dissolved in water (15 mL). A 30 wt% hydrogen peroxide solution (1.4 mL) (Sigma-Aldrich, St. Louis, MO) was added to each vial over 2 hours using a syringe pump pumping at a rate of 0.01 mL/min. Each reaction mixture was stirred overnight at room temperature with a vent to the atmosphere. Then, the content of the two vials were combined and placed in a freeze dryer for 5 days. After removal, the solid was weighed, giving 12.9 g of dry oxidized maltodextrin.

Oxidized Dextrin D Synthesis: Synthesis was reproduced in three 40 mL glass vials, which were placed in an aluminum block at room temperature. Iron(II) sulfate (about 15-18 mg) was weighed into each glass vial. 5.0 grams of maltodextrin (STAR-DRI® 1, DE=1, Tate&Lyle, London, UK) was weighed into each vial. A PTFE-coated stirbar was added to each vial and each mixture was dissolved in 15 mL of water to form a viscous solutions. Then 1.4 mL of a 30 wt% hydrogen peroxide solution was added to each viscous solution over 2 hours using a syringe pump pumping at a rate of 0.01 mL / min. The reaction mixtures were stirred overnight at room temperature with a vent to the atmosphere. All three samples were combined and placed in a freeze dryer for 3 days. The total amount of dry oxidized dextrin material isolated was 12 grams.

Aldehyde (CHO) Content of Oxidized Dextrin A 0.434 g of hydroxylamine hydrochloride (98%, Sigma-Aldrich) was added to 0.503 grams of the oxidized maltodextrin and 100g of DI H₂O. The pH was raised to 12 with 50% aqueous NaOH (Fisher Scientific) and the mix was heated to 40°C and stirred for 4 hours. Acid (0.5N HCl) titration was done on the sample and 4.534 mL of 0.5N HCL was required to titrate the sample between inflection points. 0.434g of Hydroxylamine hydrochloride was run as a control and the acid required over a similar range was 12.584 mL of 0.5N HCL. The amount of aldehyde groups in the oxidized dextrin is equal to the amount of hydroxyl amine consumed by the oxidized dextrin, ie the difference between the control and the oxidized dextrin reacted with hydroxyl amine.

Carboxylic Acid Content of Oxidized Dextrin A: 0.5 g (record weight to nearest 0.001g) of polymer sample was placed in a plastic sample cup, and approximately 10 ml of deionized (DI) water was added. The sample cup was then placed on a Radiometer Analytical TitraLabTM865 autotitrator (Radiometer Analytical SAS Cedex, FR), and titrated with 0.5N KOH to a pH of 12. The results were similar to that of non-oxidized maltodextrin indicating no appreciable conversion to the carboxylic acid for this sample.

Carboxylic Acid and Aldehyde (CHO) Content in Oxidized Dextrins B, C and D: The carboxyl and carbonyl contents of each of the oxidized maltodextrins B, C and D were determined by the procedure similar to that described in Starch 1995, 47, 19-23. The carbonyl content was determined by drying the oxidized dextrin by freeze drying for a minimum of 24 hours followed by dissolving a known amount of dry oxidized dextrin (from 400 to 600 mg) in a sufficient amount of deionized water (20 - 30 mL) to fully dissolve the oxidized dextrin to make a first solution. The pH of the first solution was adjusted to 3.2 by adding 0.1M NaOH solution. A second solution of hydroxylamine (0.30 mL of a 50 wt% solution in water) was added to the oxidized dextrin(first)_ solution while stirring the second solution with a PTFE-coated stirbar. The resulting combined solution was stirred for four hours at room temperature and was rapidly titrated with 0.6M HCl solution to get to a pH of 3.2. The molar quantity of HCl required to bring the pH to 3.2 is equivalent to the unreacted hydroxylamine in the solution. The molar difference between the hydroxylamine added and the titrated hydroxylamine is equivalent to the molar amount of aldehyde present in the oxidized dextrin. Carboxylic acid content was determined by dissolving a known amount of the dry oxidized dextrin (between 400-500 mg) in sufficient deionized water (20-30 mL) to fully dissolve the oxidized dextrin. The amount of carboxylic acid was determined by adding 0.1M NaOH solution to the solution until the solution pH reached the equivalence point. The molar amount of NaOH added is estimated to be equivalent to the molar amount of carboxylic acid present in the oxidized dextrin tested.

The aldehyde and carboxyl contents are reported in Table 1, below.

**Table 1: COOH and C=O contents of Oxidized Dextrins**

| **Oxidized Dextrin** | **millieq CHO/gram of dry oxidized dextrin** | **millieq COOH/gram dry oxidized dextrin** |
|---|---|---|
| A | 8.00 | 0.04 |
| B | 2.09 | 0.76 |
| C | 1.16 | 0.60 |
| D | 0.53 | 1.24 |

Binder Preparation: Each binder was prepared by mixing the materials indicated in Table 2, below, in the indicated proportions by adding the primary amine compound to water with stirring and then adding the oxidized dextrin to the resulting solution. For example, in Example 1, 3.45g of L-lysine was mixed with 107.53g of DI water; then, 8.5g of the oxidized dextrin A was added to the solution and the mixture was stirred. Without a dispersing agent, the mixture was homogenous the next day. In Comparative Example 7, 8.5g of the maltodextrin was mixed with 3.45g of L-lysine and 107.53g DI water.

**Table 2: Aqueous Binder Compositions**

| The following table shows the reagents and their weights in grams used for binder formulations. | | | | | | | |
|---|---|---|---|---|---|---|---|
| | **Example** | | | | | | |
| **Material** | **1** | **2** | **3*** | **4** | **5*** | **6*** | **7*** |
| Maltodextrin¹ | | | | | 10.00 | 10.00 | 8.5 |
| Oxidized Dextrin A | 8.50 | | | | | | |
| Oxidized Dextrin B | | 10.00 | | | | | |
| Oxidized Dextrin C | | | 10.00 | | | | |
| Oxidized Dextrin D | | | | 10.00 | | | |
| DI Water | 107.53 | 102.52 | 94.75 | 107.70 | 94.72 | 96.61 | 107.53 |
| Lysine (97%)² | 3.45 | | | | | 0.71 | 3.45 |
| HMDA (60%)³ | | 2.50 | 0.95 | 3.540 | 0.94 | | |

| | | | | | | | |
|---|---|---|---|---|---|---|---|
| 1. Spectrum Chemicals M1083, DE-10.5; 2. (>97% pure, Aldrich Chemicals, St. Louis, MO); 3. CAS#124-09-4, ACROS Organic, Geel, Belgium); * - denotes Comparative Example. | | | | | | | |

Tensile Testing: For each indicated binder, a binder impregnated microfiber filter (Whatman International Inc., Maidstone, England, GF/A, catalog No. 1820 866), in 20.3 cm x 25.4 cm sheets was prepared by mechanically drawing the filter sheet through a trough filled with 120 grams of a 10 wt.% (solids) pre-mixed aqueous binder that has been further mixed by agitation, then sandwiching the soaked sample between two cardboard sheets to absorb excess binder, and pressing between the two cardboard sheets in a Birch Bros. Padder (Waxham, N.C.), set at a pressure of 68.9476 kPa, and a speed 5 m/min. The resulting binder treated sheets were dried @ 90°C for 90 seconds in a Mathis Oven (Niederhasli/Zurich, CH) that is vented or equipped with a devolatilizer. The dried treated sheets were then cured at 190°C for 30, 60 seconds and 180 seconds in the same type of Mathis oven used to dry the samples. Post curing weight was determined to calculate binder add-on. "Add on" is the wt.% based on filter sheet weight of binder solids retained on the filter sheet after curing. All sheets had about 20 wt.% of binder add-on. The cured sheets were cut into 2.56 cm (1 inch) (cross machine direction) by 10.24 cm (4 inch) (machine direction) test strips and tested for tensile strength in the machine direction in a Thwing-Albert Intelect 500 tensile tester (Thwing-Albert Instrument Co., Phila., PA) The fixture gap was 5.12 cm (2 inches) and the pull rate was 2.56 cm (1 inches)/minute. Strips were tested either "as is" (dry tensile) or immediately after a 30 minute soak in water at 85°C (.) Tensile strengths were recorded as the peak force measured during parting. Data reported in Table 3, below, are averages of seven test strips tested for each binder Example.

**Table 3: Tensile Data for Binder Formulations**

| **Example** | **Cure Time** | **Dry Tensile (lbs)** | **Hot Wet Tensile (Lbs)** | **Add-on** |
|---|---|---|---|---|
| **1** | 30 | 11.40 | 4.72 | 19% |
| | 60 | 12.79 | 5.67 | 18% |
| | 180 | 11.24 | 6.82 | 17% |
| **2** | 30 | 10.16 | 2.15 | 21% |
| | 60 | 11.31 | 2.09 | 21% |
| | 180 | 12.49 | 3.23 | 19% |
| **3*** | 30 | 7.54 | 0.20 | 25% |
| | 60 | 8.14 | 0.26 | 23% |
| | 180 | 8.34 | 0.31 | 24% |
| **4** | 30 | 12.00 | 2.69 | 23% |
| | 60 | 11.54 | 3.10 | 24% |
| | 180 | 12.19 | 3.65 | 22% |
| **5*** | 30 | 10.30 | 0.21 | 23% |
| | 60 | 10.83 | 0.10 | 24% |
| | 180 | 9.50 | 0.22 | 23% |
| **6*** | 30 | 10.44 | 0.16 | 23% |
| | 60 | 9.69 | 0.18 | 23% |
| | 180 | 8.20 | 0.28 | 23% |
| **7*** | 30 | 11.97 | <0.3 | 20% |
| | 60 | 12.02 | <0.3 | 20% |
| | 180 | 11.74 | <0.3 | 18% |

As seen in Table 3, above, the binders in Comparative Examples 3, 5, 6 and 7 without oxidized dextrin provided binders having no wet strength. This indicates that the comparative binders do not form a thermosetting network and all strength is simply provided from the drying of the maltodextrin, which was washed away when the cured, dried treated filter paper sheet was submerged in the hot water. In contrast, the inventive binders of Examples 1, 2 and 4 gave substantial wet tensile strength retention. Comparative Example 3 was found to lack adequate wet tensile strength retention because it did not comprise enough aldehyde groups or was not a high enough molecular weight (or made from a low enough DE) material to insure mechanical strength in a wetted thermoset.

## Claims

1. An
aqueous thermosetting binder composition comprising i) one or more water soluble oxidized dextrin made by oxidizing a dextrin having a dextrose equivalent (DE) value of from 1 to 25, the oxidized dextrin chosen from an oxidized dextrin having from 2 to 10 millieq CHO/g of dry oxidized dextrin made by oxidizing a dextrin having a DE value of from 2 to 25, and an oxidized dextrin having from 0.25 to 5 millieq CHO/g of dry oxidized dextrin made by oxidizing a dextrin having a DE value of below 2, and ii) one or more diprimary diamine or poly(primary amine), wherein the weight ratio of the total diprimary diamine or poly(primary amine) solids to total oxidized dextrin solids ranges from 0.1:1 to 1.25:1.

2. The aqueous binder composition as claimed in claim 1, wherein the (i) water soluble oxidized dextrin is an oxidized dextrin made by oxidizing a dextrin having a DE value of below 2 and having from 0.25 to 5 millieq CHO/g of dry oxidized dextrin.

3. The aqueous binder composition as claimed in claim 1, wherein the (i) water soluble oxidized dextrin is an oxidized maltodextrin.

4. The aqueous binder composition as claimed in claim 1, wherein the (i) water soluble oxidized dextrin is an oxidized dextrin made by oxidizing a dextrin having a DE value of from 2 to 25 and having from 2 to 10 millieq CHO/g of dry oxidized dextrin.

5. The aqueous binder composition as claimed in claim 1, wherein the weight ratio of the total (ii) diprimary diamine or poly(primary amine) solids to total (i) oxidized dextrin solids ranges from 0.1:1 to 0.5:1.

6. The aqueous binder composition as claimed in claim 1, wherein the (ii) diprimary diamine or poly(primary amine) is a diprimary diamine.

7. The aqueous binder composition as claimed in any one of claims 1 to 6, further one or more stabilizer.

8. The aqueous binder composition as claimed in claim 7, wherein the one or more stabilizer is chosen from a stabilizer acid or salt having a pKa of 8.5 or less.

9. The aqueous binder composition as claimed in any one of claims 1 to 6, wherein the poly(primary amine) has a weight average molecular weight of from 200 to 5,000 and comprises 10 wt.% or more of repeating units comprising primary amine groups, based on the total weight of the poly(primary amine).

10. A method of making the compositions of any one of claims 1 to 6 comprising oxidizing one or more dextrin in water in the presence of an oxidant chosen from a periodate, a periodate salt, a combination of a peroxide and a metal salt catalyst, and an iron salt having at least one iron atom in the +2 oxidation state, to provide an aldehyde group containing oxidized dextrin, and mixing the resulting product with a diprimary diamine or a poly(primary amine).

## Patentansprüche

1. Eine wässrige, duroplastische Bindemittelzusammensetzung, die Folgendes beinhaltet: i) ein oder mehrere wasserlösliche oxidierte Dextrine, hergestellt durch Oxidieren eines Dextrins mit einem Dextroseäquivalent(DE)-Wert von 1 bis 25, wobei das oxidierte Dextrin ausgewählt ist aus einem oxidierten Dextrin mit 2 bis 10 Milliäq. CHO/g trockenes oxidiertes Dextrin, hergestellt durch Oxidieren eines Dextrins mit einem DE-Wert von 2 bis 25, und einem oxidierten Dextrin mit 0,25 bis 5 Milliäq. CHO/g trockenes oxidiertes Dextrin, hergestellt durch Oxidieren eines Dextrins mit einem DE-Wert von unter 2, und ii) ein oder mehrere diprimäre Diamine oder Poly(primäramin)e, wobei das Gewichtsverhältnis der gesamten Feststoffe des diprimären Diamins oder Poly(primäramin)s zu den gesamten Feststoffen des oxidierten Dextrins im Bereich von 0,1 : 1 bis 1,25 : 1 liegt.

2. Wässrige Bindemittelzusammensetzung gemäß Anspruch 1, wobei das (i) wasserlösliche oxidierte Dextrin ein oxidiertes Dextrin ist, das durch das Oxidieren eines Dextrins mit einem DE-Wert von unter 2 und mit 0,25 bis 5 Milliäq. CHO/g trockenes oxidiertes Dextrin hergestellt wird.

3. Wässrige Bindemittelzusammensetzung gemäß Anspruch 1, wobei das (i) wasserlösliche oxidierte Dextrin ein oxidiertes Maltodextrin ist.

4. Wässrige Bindemittelzusammensetzung gemäß Anspruch 1, wobei das (i) wasserlösliche oxidierte Dextrin ein oxidiertes Dextrin ist, das durch das Oxidieren eines Dextrins mit einem DE-Wert von 2 bis 25 und mit 2 bis 10 Milliäq. CHO/g trockenes oxidiertes Dextrin hergestellt wird.

5. Wässrige Bindemittelzusammensetzung gemäß Anspruch 1, wobei das Gewichtsverhältnis der gesamten Feststoffe des (ii) diprimären Diamins oder Poly(primäramin)s zu den gesamten Festoffen des (i) oxidierten Dextrins im Bereich von 0,1 : 1 bis 0,5 : 1 liegt.

6. Wässrige Bindemittelzusammensetzung gemäß Anspruch 1, wobei das (ii) diprimäre Diamin oder Poly(primäramin) ein diprimäres Diamin ist.

7. Wässrige Bindemittelzusammensetzung gemäß einem der Ansprüche 1 bis 6, ferner einen oder mehrere Stabilisatoren.

8. Wässrige Bindemittelzusammensetzung gemäß Anspruch 7, wobei der eine oder die mehreren Stabilisatoren aus einer Stabilisatorsäure oder einem Stabilisatorsalz mit einem pKa-Wert von 8,5 oder weniger ausgewählt sind.

9. Wässrige Bindemittelzusammensetzung gemäß einem der Ansprüche 1 bis 6, wobei das Poly(primäramin) ein Molekulargewicht im Gewichtsmittel von 200 bis 5000 aufweist und bezogen auf das Gesamtgewicht des Poly(primäramin)s 10 Gew.-% oder mehr an primäre Amingruppen beinhaltenden Wiederholungseinheiten beinhaltet.

10. Ein Verfahren zum Herstellen der Zusammensetzungen gemäß einem der Ansprüche 1 bis 6, das das Oxidieren eines oder mehrerer Dextrine in Wasser in Gegenwart eines Oxidationsmittels, ausgewählt aus einem Periodat, einem Periodatsalz, einer Kombination von einem Peroxid und einem Metallsalzkatalysator und einem Eisensalz mit mindestens einem Eisenatom in dem Oxidationszustand +2, um ein aldehydgruppehaltiges oxidiertes Dextrin bereitzustellen, und das Mischen des resultierenden Produktes mit einem diprimären Diamin oder einem Poly(primäramin) beinhaltet.

## Revendications

1. Une composition de liant thermodurcissable aqueuse comprenant i) une ou plusieurs dextrines oxydées hydrosolubles réalisées en oxydant une dextrine ayant une valeur d'équivalent en dextrose (DE) allant de 1 à 25, la dextrine oxydée étant choisie parmi une dextrine oxydée ayant de 2 à 10 milliéquivalents de CHO/g de dextrine oxydée sèche réalisée en oxydant une dextrine ayant une valeur DE allant de 2 à 25, et une dextrine oxydée ayant de 0,25 à 5 milliéquivalents de CHO/g de dextrine oxydée sèche réalisée en oxydant une dextrine ayant une valeur DE inférieure à 2, et ii) une ou plusieurs diamines biprimaires ou poly(amines primaires), dans laquelle le rapport en poids des solides de diamine biprimaire ou de poly(amine primaire) totaux aux solides de dextrine oxydée totaux est compris dans la gamme allant de 0,1/1 à 1,25/1.

2. La composition de liant aqueuse telle que revendiquée dans la revendication 1, dans laquelle la (i) dextrine oxydée hydrosoluble est une dextrine oxydée réalisée en oxydant une dextrine ayant une valeur DE inférieure à 2 et ayant de 0,25 à 5 milliéquivalents de CHO/g de dextrine oxydée sèche.

3. La composition de liant aqueuse telle que revendiquée dans la revendication 1, dans laquelle la (i) dextrine oxydée hydrosoluble est une maltodextrine oxydée.

4. La composition de liant aqueuse telle que revendiquée dans la revendication 1, dans laquelle la (i) dextrine oxydée hydrosoluble est une dextrine oxydée réalisée en oxydant une dextrine ayant une valeur DE allant de 2 à 25 et ayant de 2 à 10 milliéquivalents de CHO/g de dextrine oxydée sèche.

5. La composition de liant aqueuse telle que revendiquée dans la revendication 1, dans laquelle le rapport en poids des (ii) solides de diamine biprimaire ou de poly(amine primaire) totaux aux (i) solides de dextrine oxydée totaux est compris dans la gamme allant de 0,1/1 à 0,5/1.

6. La composition de liant aqueuse telle que revendiquée dans la revendication 1, dans laquelle la (ii) diamine biprimaire ou poly(amine primaire) est une diamine biprimaire.

7. La composition de liant aqueuse telle que revendiquée dans n'importe laquelle des revendications 1 à 6, en sus un ou plusieurs stabilisants.

8. La composition de liant aqueuse telle que revendiquée dans la revendication 7, dans laquelle ces un ou plusieurs stabilisants sont choisis parmi un acide et un sel stabilisants ayant un pKa de 8,5 ou moins.

9. La composition de liant aqueuse telle que revendiquée dans n'importe laquelle des revendications 1 à 6, dans laquelle la poly(amine primaire) a une masse moléculaire moyenne en poids allant de 200 à 5 000 et comprend 10 % en poids ou plus d'unités récurrentes comprenant des groupes amine primaire, rapporté au poids total de la poly(amine primaire).

10. Une méthode pour réaliser les compositions de n'importe laquelle des revendications 1 à 6, comprenant l'oxydation d'une ou de plusieurs dextrines dans de l'eau en présence d'un oxydant choisi parmi un périodate, un sel périodate, une combinaison d'un peroxyde et d'un catalyseur sel métallique, et un sel de fer ayant au moins un atome de fer dans l'état d'oxydation +2, afin de fournir un groupe aldéhyde contenant une dextrine oxydée, et le mélange du produit qui en résulte avec une diamine biprimaire ou une poly(amine primaire).
